# EUROPÄISCHE PATENTANMELDUNG

(11) **EP 3 763 257 A1**
(43) Veröffentlichungstag der Anmeldung: **13.01.2021**
(21) Anmeldenummer: 20179121.7
(22) Anmeldetag: 10.06.2020
(51) Int. Cl.: A47J 31/36, A47J 31/44, A47J 31/46

(54) **BRÜHEINHEIT FÜR EINEN GETRÄNKEBEREITER UND GETRÄNKEBEREITER**

(30) Priorität: 10.07.2019 DE 102019118695
(71) Anmelder: Miele & Cie. KG, 33332 Gütersloh (DE)
(72) Erfinder: Runge-Borchert, Gundula, 33330 Gütersloh (DE); Schnelle, Axel, 33106 Paderborn (DE); Schneider, Josef, 33803 Steinhagen (DE)

(57) **Zusammenfassung**

Die Erfindung betrifft eine Brüheinheit (40) für einen Getränkebereiter, wobei die Brüheinheit (40) die folgenden Merkmale aufweist:
ein Brühsieb (43);
eine Brühkammer (41) zur Aufnahme von aufzubrühender Brühsubstanz (60);
ein Wassereinlassmittel (42) mit zumindest einer Einlassleitung (L4) zum Einlassen von Brühwasser in die Brühkammer (41), wobei die Brühkammer (41) zwischen dem Brühsieb (43) und dem Wassereinlassmittel (42) angeordnet ist und das Wassereinlassmittel (42) in einer Durchlaufrichtung (F) des Brühwassers durch die Brühkammer (41) dem Brühsieb (43) vorgelagert ist,
dadurch gekennzeichnet,
dass das Brühsieb (43) bezogen zum Inneren der Brühkammer (41) einen konkaven Wölbungsabschnitt (430) aufweist oder konkav gewölbt ist.

Die Erfindung betrifft ferner einen Getränkeautomaten (1) mit einem Strömungsleitungssystem (2), unter anderem mit
- einer Brüheinheit (40) wie vorstehend beschrieben, wobei die Brüheinheit (40) eine Brühkammer (41) zur Aufnahme von aufzubrühender Brühsubstanz (60) und einer Einlassleitung zum Einlassen von Brühwasser in die Brühkammer (41).

## Beschreibung

Die Erfindung betrifft eine Brüheinheit für einen Getränkebereiter, wobei die Brüheinheit die folgenden Merkmale aufweist:
ein Brühsieb;
eine Brühkammer zur Aufnahme von aufzubrühendem Brühsubstanz;
ein Wassereinlassmittel mit zumindest einer Einlassleitung zum Einlassen von Brühwasser in die Brühkammer, wobei die Brühkammer zwischen dem Brühsieb und dem Wassereinlassmittel angeordnet ist und das Wassereinlassmittel in einer Durchlaufrichtung des Brühwassers durch die Brühkammer dem Brühsieb vorgelagert ist.

Eine Getränkebereiter mit einer entsprechenden Brüheinheit ist aus der EP 1 393 663 A1 bekannt. Hier ist eine Kaffeemaschine mit einer integrierten Kaffeemühle und einem Pulverschacht offenbart, welcher zur Zuführung von gemahlenem Kaffee aus der Kaffeemühle zu einem bewegbaren Brühzylinder dient, sowie einem mit einer handbetätigbaren Abdeckung versehenen Einlass für bereits gemahlenen Spezialkaffee.

Aus der EP 2 895 037 B1 ist ein Heißgetränkebereiter mit einer Brüheinheit bekannt, bei der das Brühsieb in der Brühkammer als ebene Fläche ausgebildet ist. Hierbei kann es vorkommen, dass Randbereiche der Brühkammer nicht mit Wasser beaufschlagt werden, sodass nicht alle gewünschten oder in der Brühkammer bereitstehenden Aromastoffe extrahiert werden.

Der Erfindung liegt somit die Aufgabe zu Grunde, einen Heißgetränkebereiter dahingehend weiterzubilden, dass eine Vielzahl von unterschiedlichen Brühgetränken optimal zubereitet werden können.

Erfindungsgemäß wird unter anderem diese Aufgabe durch eine Brüheinheit mit den Merkmalen des unabhängigen Anspruchs 1 und einen Getränkebereiter gemäß Anspruch 6 gelöst. Vorteilhafte Ausgestaltungen und Weiterbildungen der Erfindung ergeben sich aus den jeweils abhängigen Ansprüchen.

Ein mit der Erfindung erreichbarer Vorteil besteht darin, dass die in der Brühkammer befindliche Brühsubstanz vollständig und optimal durchflutet wird und dadurch alle gewünschten geschmacksrelevanten Stoffe gelöst werden. Die Qualität bzw. der Geschmack des fertig aufgebrühten Getränks wird erheblich verbessert, ohne dass mehr Brühsubstanz verwendet werden muss.

Hierzu weist das Brühsieb bezogen zum Inneren der Brühkammer einen konkaven Wölbungsabschnitt auf oder ist konkav gewölbt. Anders ausgedrückt, das Sieb ist nach außen hin gewölbt, der äußere Randbereich Bereich des Brühsiebs ragt somit weiter in die Brühkammer, als der mittlere Bereich. Dadurch wird vermeiden, dass sich in den oberen Eckbereichen Luftblasen bilden, während die Brühkammer mit der darin befindlichen Brühsubstanz durchflutet wird. Die Luftblasen verhindern den Kontakt des Wassers mit der Brühsubstanz, die sich in den Luftblasen befindet. Beim Vorhandensein von Luftblasen bleibt somit ein Teil der Brühsubstanz ungenutzt, sodass ein Teil der Aromastoffe nicht zur Entfaltung kommen. Die Brühkammer ist dabei zweckmäßigerweise zylindrisch geformt, wobei das Sieb eine gewölbte, kreisförmige Scheibe darstellt, die die auslassseitige Stirnöffnung des Zylinders abdeckt bzw. ragt dort hinein. Damit ergibt sich eine domartige Abdeckung der Brühkammer, die im Längsschnitt auf der Auslassseite keine Ecken mehr aufweist. Dadurch wird insgesamt die Durchströmung der Brühsubstanz mit dem Brühwasser verbessert, weil der gesamte Raum der Brühkammer zuverlässig durchflutet wird.

In einer insgesamt zweckmäßigen Ausführung der Erfindung erstreckt sich der Rand des Brühsiebs vom Scheitel der Wölbung um einen Anteil, der etwa 1/20 bis 1/4, bevorzugt 1/10 bis 1/6 des Durchmessers der Brühkammer entspricht. Das bedeutet, dass die Randhöhe so dimensioniert ist, dass sie dem genannten Anteil des Durchmessers entspricht. Dies reicht vollkommen aus, um einerseits die vollständige Durchströmung des gesamten Innenraumes der Brühkammer zu erreichen und andererseits nicht zu viel Volumen aufgrund der Krümmung der Kammer zu entziehen.

In einer weiteren, insgesamt vorteilhaften Ausführung weist der Scheitel des Brühsiebs eine Ebene oder einen abgeflachten Bereich auf, der einen Durchmesser aufweist, der etwa 1/4 bis 2/3 des Durchmessers der Brühkammer (43) entspricht. Hierbei ergibt sich im Längsschnitt gesehen ein abgerundeter Randbereich des Siebs, wobei der Mittenbereich eben ausgebildet ist. Dadurch wird das Volumen, das die konkave Ausformung innerhalb der Brühkammer beansprucht, reduziert, gegenüber einer parabolischen Formgebung oder einer Formgebung als Kalotte.

Ins gesamt ist es zweckmäßig, dass dem Sieb ein Sammelraum und von diesem ausgehend ein Ventilmittel und eine Auslassleitung nachgeschaltet ist, um die Brühflüssigkeit aus der Brühkammer herauszuführen. Der Sammelraum ist dabei nur wenige Millimeter dick und dient zur Führung der aufgebrühten Flüssigkeit vom Sieb zur Auslassleitung. Das Ventil ist ein selbstöffnendes Druckventil, das einen Staudruck innerhalb der Brühkammer erzeugt, wenn diese während des Aufbrühvorgangs mit Wasser, bevorzugt heißem Wasser, durchströmt wird. Dabei ist die Ventilvorrichtung bevorzugt dazu ausgebildet ist, einen Fluiddruck innerhalb der Brühkammer mit einem Wert in einem Bereich von 0,5 Bar bis 8 Bar bereitzustellen. Diese Ausbildung des Ventils dient zur Erzeugung einer qualitativ hochwertigen Crema.

Die Erfindung betrifft ferner einen Getränkeautomaten mit einem Strömungsleitungssystem mit
- einer Wasserquelle
- einer Brüheinheit wie vorstehend genannt, wobei die Brüheinheit eine Brühkammer zur Aufnahme von aufzubrühender Brühsubstanz und einer Einlassleitung zum Einlassen von Brühwasser in die Brühkammer,
- einer Zuführungsvorrichtung zum Zuführen einer vorbestimmten Menge einer ersten Brühsubstanz in die Brühkammer,
- gegebenenfalls eine Heizeinrichtung zum Erhitzen des der Brühkammer zugeführten Wassers
- eine Pumpe, die dazu ausgebildet ist, das Wasser aus der Quelle zur Brühkammer zu fördern,
- eine Steuereinrichtung zur Aktivierung und Deaktivierung der genannten Aktoren zur Zubereitung eines ausgewählten Getränks.

In einer zweckmäßigen Ausführung umfasst der Getränkeautomat ein Gehäuse zur Aufnahme und zum Fixieren der Brüheinheit, wobei das Gehäuse (11) so ausgebildet ist, dass sich die Brühkammer (41) während der Getränkezubereitung in einer Schrägstellung in einem Winkel im Bereich 15° bis 50°, bevorzugt 15° bis 35° zur Vertikalen positioniert ist. Hierbei kommt es bei einer Brühkammer mit einem Sieb ohne konkave Ausformung häufig vor, dass sich im oberen Eckbereich eine oder mehrere Luftblasen bilden, wenn die Brühkammer durchströmt wird. Mit der konkaven Ausführung bildet sich keine Luftblase innerhalb der Kammer, in der sich die Brühsubstanz befindet.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer teilweise schematischen Schnittdarstellung;
- Fig. 2:: eine bevorzugte Ausführung des Strömungsleitungssystems in einer schematischen Ansicht;
- Fig. 3:: die Brühkammer in einer schematischen Schnittdarstellung und
- Fig. 4:: das konkave Brühsieb in einer skizzierten perspektivischen Ansicht.

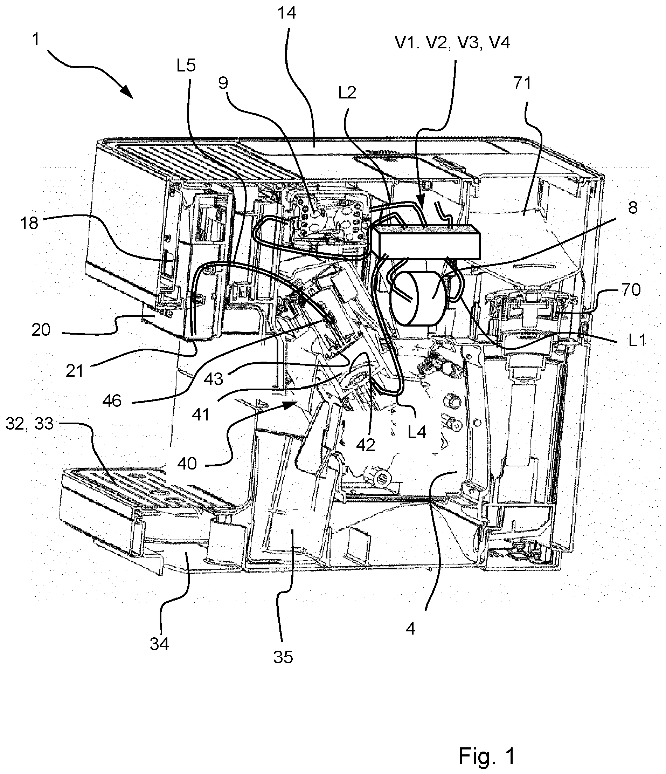

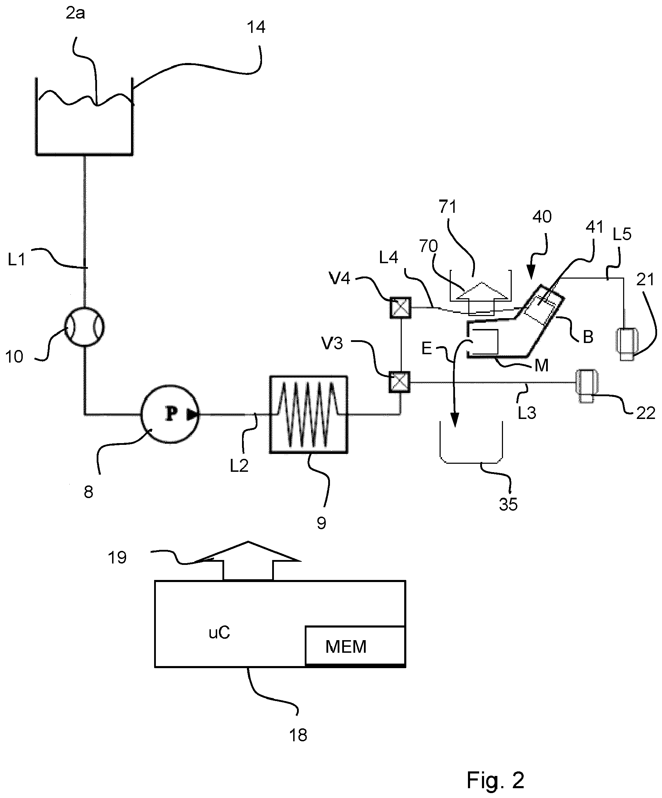

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 14 sowie die Möglichkeit, der Unterbringung des Strömungsleitungssystems 2. Das Gehäuse 11 dient ferner als Trägergestell für die Brüheinheit 40, wobei sich in der eingesetzten Position eine Schrägstellung der Brühkammer 41 ergibt. Im Frontbereich des Heißgetränkebereiter 1 verfügt dieser über einen höhenbeweglichen Auslass 20, in dem mehrere Entnahmeeinrichtungen, hier Auslassdüsen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpen 8, Ventile V1 bis V4 und Heizeinrichtung 9 und Mahlwerk 70, soweit vorhanden, zu steuern, wie es für die Zubereitung des jeweils ausgewählten Getränkes notwendig ist. Die Steuereinrichtung 18, die als Mikrocontroller uC mit einem zugeordneten Speicher MEM ausgeführt ist (Fig. 2), ist in dieser Ausführung ferner dazu eingerichtet, die Ventile V1, V2 des Strömungsleitungssystems 2 so anzusteuern, dass das heiße Wasser durch die Brühkammer 41, gepumpt wird.

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank, wird das Strömungsleitungssystem 2 mit frischem Wasser versorgt. Das Strömungsleitungssystem 2 umfasst dabei Leitungsabschnitte und Komponenten, die zur Zubereitung von Getränken dienen. Zur Erzeugung der Strömung innerhalb des Strömungsleitungssystems 2 sowie des erforderlichen Druckaufbaus dient eine Pumpe 8. Darüber hinaus weist der zur Zubereitung der Getränke genutzte Teil des Strömungsleitungssystems 2 eine Heizeinrichtung 9 zur Erwärmung des Wassers 2a sowie mehrere Entnahmeeinrichtungen 21, 22, sowie Leitungsabschnitte L1, L2, L3, L3 zur Verbindung der einzelnen Komponenten miteinander auf, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer 41 zugeführt wurde, vorgesehen ist. Zur selektiven Ansteuerung der Entnahmeeinrichtungen 21, 22 dienen die Mehrwegeventile V3 und V4, die den Entnahmeeinrichtungen 21, bzw. der Brühkammer 41 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

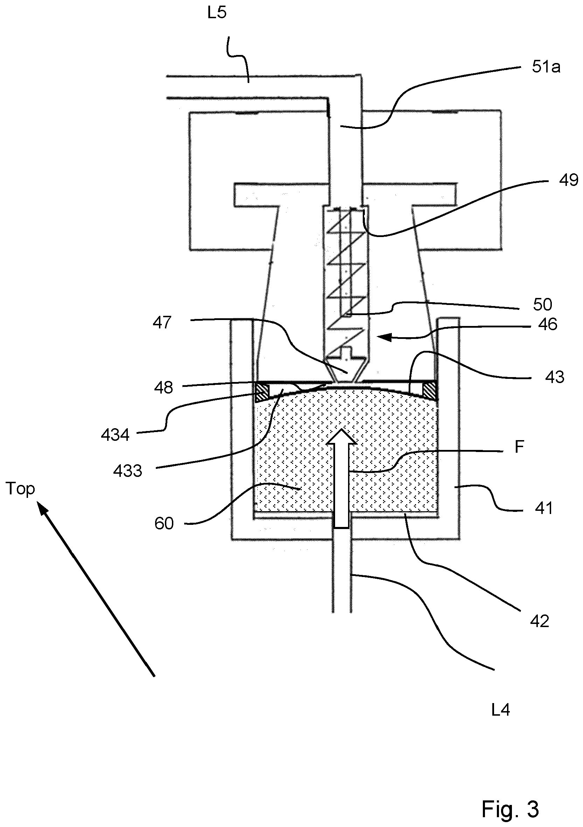

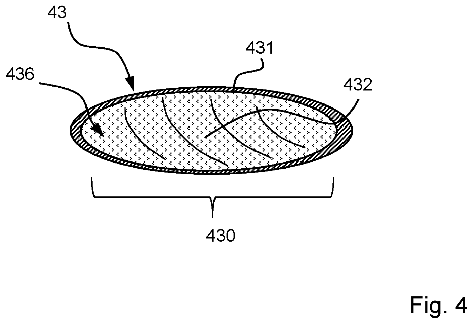

Eine Steuereinrichtung 18 mit einem Mikrocontroller uC und einer Speichereinrichtung MEM dient zur Durchführung einer Getränkezubereitung, wobei hierbei die Aktivierung der Heizeinrichtung 9, der Ventile V1, V2, V3 und V4 sowie der Pumpe 8, der Brühkammer 40 und bedarfsweise weiteren Komponenten, wie einem Mahlwerk 70 durch entsprechende Signalverbindungen 31 erfolgt. In Fig. 2 ist die Signalverbindung 19 zum Motor der Pumpe 8 und zu den anderen, zu steuernden Komponenten grob skizziert, wobei die Ansteuerung der Pumpe 8 in einer bevorzugten derart erfolgt, dass verschiedene Förderleistungen eingestellt werden können. Die Steuereinrichtung 18 ist in einer bevorzugten Ausführung ferner dafür programmiert, den Servomotor 52 (Fig. 3, 4) der Ventilvorrichtung 46 zur Einstellung des Brührucks in der Brühkammer 41 zu aktivieren oder u betreiben, um unterschiedliche Drücke zum Öffnen des Ventils 46 einzustellen.

Fig. 3 zeigt schematisch die Brühkammer 41 in einer ersten Ventileinstellung, die für einen geringen Brühdruck, beispielsweise 0,5 Bar, vorgesehen ist. Im Inneren der Brühkammer 41 ist in Fluidrichtung F eingangsseitig die Einlassleitung L4 mit dem Einlasssieb 42 angeordnet. Auf der gegenüberliegenden Seite der Brühkammer 41 ist das Brühsieb 43 mit der daran angeschlossenen Auslassleitung L5 angeordnet. Zwischen den beiden Sieben 42, 43 ist die Aufgusssubstanz 60, beispielsweise Kaffeemehl, eingebracht. Zwischen dem Brühsieb 43 und der Auslassleitung L5 bzw. in der Auslassleitung L5 ist das Ventil 46 angeordnet, das selbständig bei Überschreiten eines vorgegebenen Fluiddrucks öffnet und das Aufgussfluid durch die Auslassleitung L5 strömen lässt. Das Ventil 46 umfasst einen Ventilsitz 48, auf den der bewegliche Ventilkörper 47 zur Anlage kommt, wenn der Körper 47 mittels der Druckfeder 50 gegen den Sitz 48 gedrückt wird. Die Feder 50 liegt dabei mit dem einen Ende auf dem Ventilkörper 47 auf und stützt sich mit dem gegenüberliegenden Ende an dem Anschlag 49 ab. Die Feder 50 ist so dimensioniert, dass zum Bewegen des Ventilkörpers 47 aus dem Ventilsitz 48 heraus ist ein vorgegebener Fluiddruck bereitgestellt werden muss, beispielsweise ein Druck im Bereich von 0,3 bis 0,8 Bar, vorzugsweise 0,5 Bar. Das Brühsieb 43 besteht aus einer Platte mit Löchern 436 und ist dabei konkav gewölbt, das bedeutet, der Randbereich 431 ragt dabei weiter in die Brühkammer 41 hinein, als der Mittenbereich 432. Dies ist in Fig. 4 in der skizzierten Einzelansicht verdeutlicht. Der Sammelraum 433 hinter der Brühkammer 41 ist dabei abgedichtet gegenüber der umlaufenden Seitenwand der Brühkammer 41 und besitzt einen Auslass 48, der bereits vorstehend beschrieben ist. Die umlaufende Dichtung 434 bildet eine dichtende Anlage des Siebs 43 innerhalb der Brühkammer 41 und dichtet die Brühkammer 41 und den Sammelraum 433 gegenüber der Umgebung der Kammer 41 ab. Mit dem Pfeil "Top" ist die Senkrechte skizziert, sodass die hier gezeigte Brühkammer 41 schräg steht.

Insgesamt beziehen sich alle Positions- und Richtungsangaben auf die betriebsgemäße Aufstellposition des Getränkebereiters 1 bzw. den betriebsgemäßen Einsatz der Brüheinheit 40.

## Patentansprüche

1. Brüheinheit (40) für einen Getränkebereiter, wobei die Brüheinheit (40) die folgenden Merkmale aufweist:
ein Brühsieb (43);
eine Brühkammer (41) zur Aufnahme von aufzubrühender Brühsubstanz (60);
ein Wassereinlassmittel (42) mit zumindest einer Einlassleitung (L4) zum Einlassen von Brühwasser in die Brühkammer (41), wobei die Brühkammer (41) zwischen dem Brühsieb (43) und dem Wassereinlassmittel (42) angeordnet ist und das Wassereinlassmittel (42) in einer Durchlaufrichtung (F) des Brühwassers durch die Brühkammer (41) dem Brühsieb (43) vorgelagert ist,
**dadurch gekennzeichnet,**
**dass** das Brühsieb (43) bezogen zum Inneren der Brühkammer (41) einen konkaven Wölbungsabschnitt (430) aufweist oder konkav gewölbt ist.

2. Brüheinheit (40) nach Anspruch 1,
wobei der Rand (431) des Brühsiebs vom Scheitel (432) der Wölbung sich um einen Anteil erstreckt, der etwa 1/20 bis 1/4, bevorzugt 1/10 bis 1/6 des Durchmessers der Brühkammer entspricht.

3. Brüheinheit (40) nach Anspruch 1 oder 2,
wobei der Scheitel (432) des Brühsiebs (43) eine Ebene oder einen abgeflachten Bereich bildet und einen Durchmesser aufweist, der etwa 1/4 bis 2/3 des Durchmessers der Brühkammer (43) entspricht.

4. Brüheinheit (40) nach einem der Ansprüche 1 bis 3,
wobei dem Sieb (43) ein Sammelraum (433) und von diesem ausgehend ein Ventilmittel (46) und eine Auslassleitung (L5) nachgeschaltet ist, um die Brühflüssigkeit aus der Brühkammer (41) herauszuführen.

5. Brüheinheit (40) nach Anspruch 4,
wobei die Ventilvorrichtung (46) dazu ausgebildet ist, einen Fluiddruck innerhalb der Brühkammer (41) in einem Bereich von 0,5 Bar bis 8 Bar bereitzustellen.

6. Getränkeautomat (1) mit einem Strömungsleitungssystem (2) mit
- einer Wasserquelle (14)
- einer Brüheinheit (40) gemäß einem der Ansprüche 1 bis 5, wobei die Brüheinheit (40) eine Brühkammer (41) zur Aufnahme von aufzubrühender Brühsubstanz (60) und einer Einlassleitung zum Einlassen von Brühwasser in die Brühkammer (41),
- einer Zuführungsvorrichtung (70, 73) zum Zuführen einer vorbestimmten Menge einer ersten Brühsubstanz (S1) in die Brühkammer (41),
- eine Heizeinrichtung (9) zum Erhitzen des der Brühkammer (41) zugeführten Wassers
- eine Pumpe (8), die dazu ausgebildet ist, das Wasser aus der Quelle (14) zur Brühkammer (41) zu fördern,
- eine Steuereinrichtung (18) zur Aktivierung und Deaktivierung der genannten Aktoren (8, 9, 72) zur Zubereitung eines ausgewählten Getränks.

7. Getränkeautomat (1) nach Anspruch 6, wobei der Getränkeautomat (1) ein Gehäuse (11) zur Aufnahme und zum Fixieren der Brüheinheit (40) umfasst, wobei das Gehäuse (11) so ausgebildet ist, dass sich die Brühkammer (41) während der Getränkezubereitung in einer Schrägstellung in einem Winkel im Bereich 15° bis 50°, bevorzugt 15° bis 35° zur Vertikalen positioniert ist.
